(19) Europäisches Patentamt

European Patent Office

Office européen des brevets

(11) Veröffentlichungsnummer: **0 248 319 B1**

(12) **EUROPÄISCHE PATENTSCHRIFT**

(45) Veröffentlichungstag der Patentschrift: **26.08.92**

(51) Int. Cl.⁵: **H02H 9/04**, H04M 3/18

(21) Anmeldenummer: **87107604.8**

(22) Anmeldetag: **25.05.87**

(54) Schaltungsanordnung zum Schutz der elektronischen Schnittstellenschaltung von Teilnehmeranschlussschaltungen.

(30) Priorität: **06.06.86 DE 3619037**

(43) Veröffentlichungstag der Anmeldung:
**09.12.87 Patentblatt 87/50**

(45) Bekanntmachung des Hinweises auf die Patenterteilung:
**26.08.92 Patentblatt 92/35**

(84) Benannte Vertragsstaaten:
**AT BE CH DE FR GB IT LI SE**

(56) Entgegenhaltungen:
DE-A- 2 414 010
GB-A- 2 119 187
US-A- 4 217 504
US-A- 4 377 832

(73) Patentinhaber: **SIEMENS AKTIENGESELL-SCHAFT**
**Wittelsbacherplatz 2**
**W-8000 München 2(DE)**

(72) Erfinder: **Wingerath, Norbert, Dipl.-Ing.**
**Zillertalstrasse 63**
**W-8000 München 70(DE)**

## Beschreibung

Die Erfindung betrifft eine Schaltungsanordnung zum Schutz der elektronischen Schnittstellenschaltung von Teilnehmeranschlußschaltungen eines digitalen Zeitmultiplex-Fernmeldenetzes, die gruppenweise mit einer Speisebatterie zur Lieferung des Teilnehmerspeisestroms verbunden sind, unter Verwendung von Thyristoren als Schutzelementen, die für Überspannungen auf den Adern der an die Teilnehmeranschlußschaltung angeschlossenen Teilnehmeranschlußleitung, die die Speisespannung übersteigen, einen niederohmigen Ableitpfad bilden.

Wenn bei den als Schutzelementen verwendeten Thyristoren die Steuerelektrode mit der Spannung der Speisebatterie beaufschlagt wird, wie dies bei einer aus dem US-Patent 4 377 832 bekannten Schaltungsanordnung der Fall ist, bei der allerdings lediglich die Verhältnisse im Zusammenhang mit einer einzigen Teilnehmeranschlußschaltung betrachtet sind, kann der Forderung Rechnung getragen werden, daß Spannungen, die größer als die Speisespannung sind, nicht an die Bauelemente der Schnittstellenschaltung gelangen.

Als Überspannungen, gegen die eine solche Schutzschaltung wirken soll, kommen in erster Linie durch Blitzbeeinflussung der Teilnehmeranschlußleitungen entstehende Überspannungen infrage. Bei einem Blitzeinschlag sind immer eine Vlelzahl von Adernpaaren betroffen, so daß in einer Vielzahl von Teilnehmeranschlußschaltungen die Thyristorschutzelemente gleichzeitig in den leitenden Zustand gesteuert werden müssen, mit der Folge, daß bei Zündströmen in der Größenordnung von 50 bis 250 mA pro Thyristor die Speisebatterie, die evtl. durch einen elektronischen Schaltregler realisiert ist, nicht in der Lage ist, die Summe der Zündströme zu liefern, was bedeutet, daß das ordnungsgemäße Ansprechen der Schutzelemente für alle betroffenen Teilnehmeranschlußschaltungen nicht mehr gewährleistet ist.

Die Aufgabe der Erfindung besteht daher darin, eine Schaltungsanordnung anzugeben, die auch unter den geschilderten Umständen einen sicheren Schutz der Schnittstellenschaltungen gewährleistet.

Die Aufgabe wird mit einer Schaltungsanordnung der eingangs genannten Art gelöst, die erfindungsgemäß dadurch gekennzeichnet ist, daß bei den mit ihren Hauptstromstrecken jeweils zwischen einer Teilnehmeranschlußleitungsader und einem Erdpotential führenden Schaltungspunkt angeschlossenen Thyristoren jeweils zwischen der einen Hauptelektrode und der Steuerelektrode ein Halbleiterschalter mit geringerem Steuerstrombedarf als die Thyristoren angeschaltet ist, dessen Steuerelektrode von der Spannung der Speisebatterie beaufschlagt wird.

Bei der erfindungsgemäßen Schutzschaltung muß die Speisebatterie also nur die wesentlich geringeren Zündströme für die Halbleiterschaltelemente liefern, wogegen der Zündstrom für die eigentlichen Schutzelemente, also die Thyristoren, von dem gegen Erdpotential fließenden Blitzstrom abgezweigt wird und damit die Speisebatterie nicht belastet.

Gemäß einer ersten Ausführungsform der Erfindung wird als Halbleiterschaltelement ein Kleinthyristor verwendet. Bei einer anderen Ausführungsform der Erfindung ist der Halbleiterschalter ein Transistor.

Nachstehend wird die Erfindung anhand eines Ausführungsbeispiels unter Bezugnahme auf eine Figur näher erläutert.

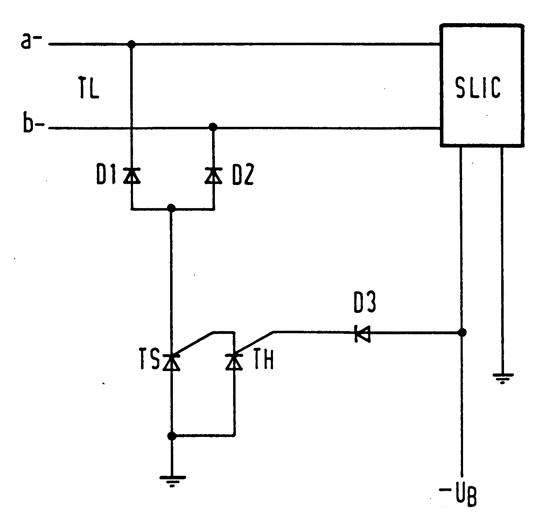

In der Figur ist lediglich derjenige Teil der erfindungsgemäßen Schaltungsanordnung dargestellt, der einen Schutz gegen negative Blitzspannungen in Bezug auf das Speisespannungspotential -UB gewährleistet. Für die Ableitung von positiven Blitzspannungen bei Überschreiten des Speisespannungspotentials +UB ist eine entsprechende Anordnung zu denken.

Die Figur zeigt einen Schutzthysistor TS, dessen eine Hauptelektrode auf Erdpotential liegt und dessen andere Hauptelektrode über Dioden D1 und D2, an die Adern a und b einer Teilnehmeranschlußleitung TL angeschlossen sind. Die Dioden D1 und D2 dienen dabei der Entkopplung der beiden Leitungsadern. Die Teilnehmeranschlußschaltung für die Teilnehmeranschlußleitung TL, deren Schnittstellenschaltung geschützt werden soll, ist mit SLIC bezeichnet.

An die mit Erdpotential verbundene Hauptelektrode des Schutzthyristors TS und an dessen Gate-Elektrode ist ein Hilfsthyristor TH mit seinen Hauptelektroden angeschlossen. Die Gate-Elektrode des Hilfsthyristors TH wird über eine weitere Diode D3 mit dem Speisespannungspotential -UB beaufschlagt. Diese Diode verhindert einen Kurzschluß der Speisebatterie wenn die Schutzschaltung leitend ist. Beim Hilfsthyristor TH handelt es sich um einen Kleinthyristor, dessen Steuerstrombedarf wesentlich geringer ist als diejenige des Schutzthyristors TS.

Wenn nun auf den Adern a und b der Teilnehmeranschlußleitung TL negative Überspannungen, beispielsweise negative Blitzspannungen auftreten, die das Speisespannungspotential -UB übersteigen, wird die durch den mit dem Speisespannungspotential -UB beaufschlagten Hilfsthyristors TH festgelegte Ansprechschwelle des Schutzthyristors überschritten, der daraufhin in den leitenden Zustand übergeht, so daß eine Ableitung der Blitzspannungen gegen Erdpotential erfolgt. Der Steuerstrom für den Schutzthyristor TS wird dabei über die Hauptstromstrecke des Hilfsthyristors TH geliefert und direkt vom Blitzstrom abgezweigt, so daß die Speisebatterie hierdurch nicht belastet wird. Selbst wenn Schutzschaltungen der dargestellten Art für eine größere Gruppe von Teilnehmeranschlußleitungen bzw. Teilnehmeranschlußschaltungen von derselben Speisebatterie gleichzeitig mit Steuerstrom versorgt werden müssen, da eine Vielzahl von Teilnehmeranschlußleitungen von einem Blitzeinschlag betroffen ist, wird der insgesamt erforderliche Steuerstrom wegen des relativ geringen Steuerstrombedarfs der Hilfstransistoren TH die Kapazität der Speisebatterie nicht übersteigen, so daß das ordnungsgemäße Funktionieren sämtlicher Schutzschaltungen gewährleistet ist.

Im Falle positiver Überspannungen, die das Speisespannungspotential +UB übersteigen, wird der erwähnte andere Teil der erfindungsgemäßen Schutzschaltung ansprechen.

Anstelle der Hilfsthyristoren TH kann gemäß einer anderen Ausführungsform der Erfindung auch ein Hilfstransistor entsprechend kleinen Steuerstrombedarfs Verwendung finden.

## Patentansprüche

1. Schaltungsanordnung zum Schutz der elektronischen Schnittstellenschaltung von Teilnehmeranschlußschaltungen eines digitalen Zeitmultiplex-Fernmeldenetzes, die gruppenweise mit einer Speisebatterie zur Lieferung des Teilnehmerspeisestroms verbunden sind, unter Verwendung von Thyristoren (TS) als Schutzelementen, die für Überspannungen auf den Adern der an die Teilnehmeranschlußschaltung angeschlossenen Teilnehmeranschlußleitung, die die Speisespannung übersteigen, einen niederohmigen Ableitpfad bilden,
**dadurch gekennzeichnet,**
daß bei den mit ihren Hauptstromstrecken jeweils zwischen den Teilnehmeranschlußleitungsadern (a,b) und einem Erdpotential führenden Schaltungspunkt angeschlossenen Thyristoren (TS) jeweils zwischen der einen Hauptelektrode und der Steuerelektrode ein Halbleiterschaltelement (TH) mit geringerem Steuerstrombedarf als die Thyristoren angeschaltet ist, dessen Steuerelektrode von der Spannung (-UB) der Speisebatterie beaufschlagt wird.

2. Schaltungsanordnung nach Anspruch 1,
**dadurch gekennzeichnet,**
daß der steuerbare Halbleiterschalter ein Thyristor (TH) geringerer Leistungsklasse als der Schutzthyristor ist.

3. Schaltungsanordnung nach Anspruch 1,
**dadurch gekennzeichnet,**

daß der Halbleiterschalter ein Schalttransistor geringerer Leistungsklasse als der Schutzthyristor ist.

## Claims

1. Circuit for protecting the electronic interface circuit of subscriber line circuits of a digital time-division multiplex telecommunication network which are connected group by group to a feed battery for supplying the subscriber feed current, using thyristors (TS) as protective elements which form a low-impedance bypass path for over-voltages exceeding the feed voltage on the wires of the subscriber line connected to the subscriber line circuit, characterised in that in the thyristors (TS) in each case connected with their main current paths between the subscriber line wires (a, b) and a circuit point carrying earth potential, one semiconductor switching element (TH) having a lower control current requirement than the thyristors is in each case connected between one main electrode and the control electrode, to the control electrode of which element the voltage (-UB) of the feed battery is applied.

2. Circuit arrangement according to Claim 1, characterised in that the controllable semiconductor switch is a thyristor (TH) of a lower power class than the protective thyristor.

3. Circuit arrangement according to Claim 1, characterised in that the semiconductor switch is a switching transistor of lower power class than the protective thyristor.

## Revendications

1. Montage pour protéger le circuit d'interface électronique de circuits de raccordement d'abonnés d'un réseau de télécommunications numérique à multiplexage temporel, qui sont raccordés, par groupes, à une batterie d'alimentation servant à délivrer le courant d'alimentation d'abonné, moyennant l'utilisation de transistors (TS) en tant qu'éléments de protection, qui forment une voie de dérivation de faible valeur ohmique pour des surtensions présentes dans les conducteurs de la ligne d'abonné raccordée au circuit de raccordement d'abonné, ces surtensions dépassant la tension d'alimentation, caractérisé par le fait que, dans les transistors (TS) dont les sections principales de courant sont branchées respectivement entre les conducteurs (a,b) de la ligne d'abonné et un point du circuit placé au potentiel de terre, respectivement entre une électrode principale et l'électrode de commande est branché un élément de circuit à semiconducteurs (TH) possédant un besoin en courant de commande plus faible que les thyristors et dont l'électrode de commande est chargée par la tension (-UB) de la batterie d'alimentation.

2. Montage suivant la revendication 1, caractérisé par le fait que l'interrupteur à semiconducteurs commandable est un thyristor (TH) d'une classe de puissance plus faible que le thyristor de protection.

3. Montage suivant la revendication 1, caractérisé par le fait que l'interrupteur à semiconducteurs est un transistor de commutation d'une classe de puissance inférieure à celle du thyristor de protection.